# EUROPÄISCHE PATENTANMELDUNG

(11) **EP 1 431 705 A1**
(43) Veröffentlichungstag der Anmeldung: **23.06.2004**
(21) Anmeldenummer: 03027227.2
(22) Anmeldetag: 28.11.2003
(51) Int. Cl.: G01B 11/00, B25J 9/16

(54) **Einrichtung und Verfahren zur Bestimmung der Position eines Werkstücks unter Verwendung einer Schwenkneigekopfkamera**

(30) Priorität: 22.12.2002 DE 10261150; 18.06.2003 DE 10327479
(71) Anmelder: VMT Bildverarbeitungssysteme GmbH, 69469 Weinheim (DE)
(72) Erfinder: Grünewald, Frank, Dr.-Ing., 64988 Birkenau (DE); Mikeska, Harald Manfred Günter, 68219 Mannheim (DE)
(74) Vertreter: Mierswa, Klaus

(57) **Zusammenfassung**

Die Erfindung betrifft eine Einrichtung zur Bestimmung der Position eines Werkstücks und der Position von Merkmalen des Werkstücks im 3D-Raum unter Verwendung von mindestens einer elektronischen Kamera und digitaler Bildverarbeitung, bei welchem die Kamera/s auf ein Weltkoordinatensystem kalibriert sind und das Werkstück in den Raum vor der Kamera bzw. zwischen den Kameras verbracht ist. Als Kameras finden Schwenkneigekopfkameras, SNK-Kameras, Verwendung, welche einen schwenkbaren, frei positionierbaren Sensorkopf mit einer Zoomoptik aufweisen, wobei die Position des Sensorkopfes und der Zoomoptik parametrierbar und in Abhängigkeit vom Objekt-Typ im Einricht-Betrieb optimal einstellbar ist. Ebenso betrifft die Erfindung ein Verfahren, bei welchem als Kameras Schwenkneigekopfkameras eingesetzt werden, welche einen schwenkbaren, frei positionierbaren Sensorkopf mit einer Zoomoptik aufweisen, wobei die Position des Sensorkopfes wie auch die Zoomoptik parametrierbar ist und die Parametrierung in Abhängigkeit vom Objekt-Typ im Einricht-Betrieb optimal eingestellt wird.

## Beschreibung

### Technisches Gebiet:

Die Erfindung betrifft eine Einrichtung zur Bestimmung der Position eines Werkstücks und der Position von Merkmalen des Werkstücks im 3D-Raum unter Verwendung von mindestens zwei elektronischen Kameras und digitaler Bildverarbeitung, bei welchem die Kameras auf ein gemeinsames Weltkoordinatensystem kalibriert sind und das Werkstück in den Raum zwischen den Kameras verbracht ist, gemäß dem Oberbegriff des Anspruchs 1 sowie ein Verfahren dafür.

### Stand der Technik:

Die schnelle und berührungslose 3D-Vermessung eines dreidimensionalen Körpers besitzt eine Schlüsselfunktion auf dem Weg zu höhere Automatisierung und zur vollständigen Qualitätssteuerung und Qualitätsüberwachung in vielen Fertigungsprozessen, weil sie die genaue Kenntnis der Position von Objekten im Raum und deren Lage relativ zueinander liefert. In der industriellen Produktion kommt der schnellen und berührungslosen 3D-Positions- und 3D-Formerfassung eine große Bedeutung zu, so zum Beispiel für die Maßhaltigkeitskontrolle, die Vollständigkeitsprüfung, Robotersichtführung in der automatischen Montage, Prüfung von Oberflächen, Reserve-Engineering, Überwachung von Sicherheitszonen, 3D-Positionsbestimmung und Navigation im Raum. Die 3D-Formerfassung liefert die Positionen von Objekten, die unabhängig vom Oberflächenzustand, von der Entfernung, Drehung und Beleuchtung sind, das heißt, sie sind rotations-, verschiebungs- und beleuchtungsinvariant.

Hierzu werden auf dem Gebiet der Kalibrierung von elektronischen stationären Kameras Verfahren eingesetzt, die sich mit der Auswertung von bekannten Merkmalen im Videobild befassen, wobei alle bekannten Verfahren auf dem Modell der Lochkamera aufsetzen. Parameter sind die optimale Brennweite, die Position der Lichteintrittsöffnung im Raum und Linsenverzeichnungsparameter sowie Parameter, die sich mit der Position des CCD-Chips im Bezug zum Lochkoordinatensystem befassen. In den Videobildern versucht man, über die Betrachtung von Kalibrierkörpern oder Kalibrierplatten die Parameter der Kameramodelle zu ermitteln.

Beispielsweise hierfür ist durch die EP 0 763 406 A1 ein Verfahren zum Bestimmen der Lage eines Körpers im Raum bekannt geworden, um Manipulationen an diesem durchzuführen, mit mehreren mit diesem zusammenwirkenden räumlich getrennten elektronischen Kameras mit Bildverarbeitung. Jede von mindestens drei räumlich getrennten elektronischen Kameras mit Bildverarbeitung nimmt bei deren Einmessung eine ihr zugeordnete Kalibriertafel mit Punktmuster auf, deren Bilder sowie das Punktmuster zur Bestimmung der Lage der einzelnen Kamera im Raum verarbeitet und deren Lage speichert. Eine Vermessung der Kalibriertafeln zueinander erfolgt hiervon getrennt, wobei diese Werte ebenfalls gespeichert werden. Anschließend wird der zu vermessende Körper in den Raum zwischen den elektronischen Kameras verbracht. Je ein charakteristischer Punkt auf dem in den Raum verbrachten Körper wird in je einer diesem zugeordneten elektronischen Kamera abgebildet, so dass dessen Lage in Bild mit seiner konstruktiven vorgegebenen Position des charakteristischen Punktes auf den in den Raum verbrachten Körper zusammen mit den gespeicherten Werten verarbeitet wird; alle derart verarbeiteten Werte charakterisieren die Lage des in dem Raum verbrachten Körpers in den sechs räumlichen Freiheitsgraden. Nachteilig an diesem Verfahren ist prinzipiell, dass zum Bestimmen der Lage eines Körpers im Raum Kalibriertafeln verwendet werden, welche sorgfältig gehandhabt werden müssen und nicht beschädigt werden dürfen wie sie auch Lagerplatz benötigen. Der wesentliche Nachteil ist, dass die Kalibriertafeln mit einem großen Aufwand mechanisch im Sichtfeld der Kameras positioniert werden müssen und die Positionierbarkeit äußerst wiederholgenau sein muss. Diese Reproduzierbarkeit der Positionierung zu gewährleisten ist oft mit erheblichen Kosten verbunden, da die räumlichen Verhältnisse zum Beispiel in der Fördertechnik häufig schwierig sind.

Durch die EP 0473010A2 ist ein Verfahren zur berührungslosen Koordinatenvermessung von Objektoberflächen bekannt geworden, bei dem mit einer Kamera Bilder des Objektes von mehreren unterschiedlichen Positionen aus aufgenommen werden. Die Kamera ist dazu in den Messarm eines Koordinatenmessgerätes gesetzt, wobei der Messarm in mindestens zwei verschiedene Stellungen verfahren wird und das zu vermessende Objekt mit Hilfe einer Dreh-Schwenk-Einrichtung angezielt wird. Die in zwei Stellungen aufgenommenen Bilder werden abgespeichert und in Bezug auf die Koordinaten charakteristischer Punkte ausgewertet. Dabei werden die von den Maßstäben des Koordinatenmessgerätes und den Winkelgebern der Dreh-Schwenk-Einrichtung erhaltenen Positionswerte für die Berechnung der Objektkoordinaten aus den Bildkoordinaten der Kamera herangezogen.

Zur Vermeidung der Nachteile des Umgangs mit Kalibriertafeln ist durch die DE 100 16 963 A1 ein Verfahren zur Bestimmung der Position eines Werkstücks und der Position von Merkmalen des Werkstücks im 3D-Raum unter Verwendung von mindestens zwei elektronischen Kameras und digitaler Bildverarbeitung bekannt geworden, bei welchem die Kameras auf ein gemeinsames Weltkoordinatensystem kalibriert werden und anschließend das Werkstück in den Raum zwischen den Kameras verbracht wird. Für die Lagebestimmung von Objekten für einen Objekt-Typ werden somit wenigstens drei stationäre Kameras oder andere geeignete Sensoren eingesetzt. Aus den 2dimensionalen Abbildern von Objekt-Merkmalen und der Kenntnis der Lage dieser Merkmale in einem gemeinsamen Koordinatensystem und der Kenntnis der Position der Kameras im Raum, wird die 3dimensionale Positionsverschiebung des Objekts gegenüber einer einmalig eingelernten Nullposition berechnet. Damit werden Manipulatoren, zum Beispiel Roboter, in ihrer Position korrigiert bzw. gesteuert, um am Objekt lagerichtig Manipulationen vornehmen zu können, wie zum Beispiel Vorgänge wie Nahtabdichten, Lackieren, Spritzen, Greifen, Montieren, Demontieren und anderes mehr.

Es wird davon ausgegangen, dass sich die Objekt-Merkmale ortsfest auf dem Objekt befinden und zum Beispiel Ecken, Löcher, Sicken, Markierungen, Aufdruck oder sonstige visuell erfassbare Konturen sind. Dabei werden die Bildfelder und die Positionen der Kameras nach folgenden Kriterien festgelegt:
A: Lage der Objekt-Merkmale auf dem Objekt:
   Eine optimale Position der Kameras ist gegeben, wenn diese möglichst gleichmäßig um das Objekt verteilt sind und die Kameras aus einem Winkel von 45Grad auf die Merkmale gerichtet sind.
B: Positionsungenauigkeit der Objekte im Kamerabildfeld:
   Je größer die Ungenauigkeiten bei der Vorpositionierung sind, um so größer muss das Bildfeld sein.
C: Typenvielfalt:
   Je mehr unterschiedliche Objekt-Typen vorhanden sind und je mehr sich die Lage der Objekt-Merkmale unterscheidet, desto größer muss das Bildfeld festgelegt werden. Da jedoch die geforderte Genauigkeit - wobei eine Genauigkeit zwischen 0,3mm bis 1 mm typisch ist - kein großes Bildfeld zulässt, müssen mehrere stationäre Kameras eingesetzt werden.
D: Geforderte Genauigkeit:
   Je höher die geforderten Genauigkeiten sind, desto höher muss die Auflösung sein, woraus ein kleines Bildfeld resultiert.

Der Einsatz und die Verwendung von stationären Kameras hat den Nachteil, dass immer ein Kompromiss zwischen der erforderlichen Bildfeldgröße, für die Erfassung unterschiedlicher Objekt-Typen und der notwendigen Auflösung, das ist die Genauigkeit, gefunden werden muss. Außerdem erfolgt dadurch eine zwangsläufige Festlegung auf vorauszuwählende Bereiche, welche später, wenn überhaupt, nur noch durch erheblichen Überarbeitungsaufwand verändert werden können.

Da die geforderten Genauigkeiten typischer Weise hoch sind wie auch die Typenvielfalt sehr groß ist, müssen gewöhnlich sehr viele stationäre Kameras eingesetzt werden. Das hat einen erhöhten Hardwareeinsatz und damit erhöhte Installationskosten zur Folge, wie sich ebenfalls die Instandhaltungskosten erhöhen. Insbesondere aber erhöht sich mit der Anzahl der Sensoren, wie Kameras, die Ausfallwahrscheinlichkeit mit jedem weiteren Sensor.

Stationäre Kameras mit Objektiven und festen Brennweiten besitzen eine optimale Fokusebene und eine beschränkte Schärfentiefe, so dass Merkmale, deren Abstände vom Objektiv variieren, nicht optimal abgebildet werden, was zu Messungenauigkeiten und Einschränkungen bei der Auswahl der anzutastenden Objekt-Merkmale führt.

In wirtschaftlicher Hinsicht ist ein Ziel der Erfindung die Erhöhung der Flexibilität: Investitionen müssen sich durch Verwendung der gleichen Anlage über mehrere Modellzyklen rechnen lassen. Anlageumbauten sollen bei Veränderung der Objekte oder bei neuen Modellen, z.B. von Fahrzeugkarossen, möglichst vermieden werden. Werden die Objekte oder deren Objekt-Merkmale geändert und fallen diese zum Beispiel weg oder befinden sich an einer anderen Stelle, soll das System darauf einfach und ohne Umbauten oder gar zusätzliche Hardware angepasst werden können. Ebenso ist es ein Ziel der Erfindung, die Komplexität bei gleichzeitiger Erhöhung der Flexibilität und Leistungsfähigkeit zu reduzieren. Ebenso ist es ein Ziel der Erfindung, neben der 3dimesionalen Positionsbestimmung, wie Messen, möglichst weitere Aufgabenstellungen mit dem gleichen System zu lösen, wie Typerkennung oder Typverifikation, Kontrolle von Anbauteilen, Lesen von Beschriftungen, Lagebestimmung von Anbauteilen, Inspektion der zu applizierenden Bereiche und Inspektion von zum Beispiel aufgebrachten Klebern.

### Technische Aufgabe:

Der Erfindung liegt die Aufgabe zugrunde, eine derartige Einrichtung in ihrer technischen Ausgestaltung flexibler zu gestalten, den Installationsaufwand einer derartigen Einrichtung zu senken wie auch die Kosten der Gesamtanlage zu minimieren, ebenso wie die Folgekosten für Instandhaltung und Anlagenwartung sowie die Lagerhaltungskosten durch geringere Anzahl von Komponenten und Komponentenvarianten zu senken. Insbesondere sollen weitere Aufgabenstellungen mit der gleichen Einrichtung oder dem gleichen System gelöst werden können, wie Inspektionen, Typerkennung oder Typverifikation, Kontrolle von Anbauteilen, Lesen von Beschriftungen, Lagebestimmung von Anbauteilen, Inspektion der zu applizierenden Bereiche und Inspektion von aufzubringenden oder aufgebrachten Gegenständen, wie zum Beispiel aufgebrachte Kleber.

### Offenbarung der Erfindung sowie deren Vorteile:

Die Lösung der Aufgabe bei einer Einrichtung der eingangs genannten Gattung besteht darin, dass als Kamera eine oder mehrere Schwenkneigekopfkameras, abgekürzt genannt SNK-Kamera, oder eine Kombination von wenigstens einer Schwenkneigekopfkamera und von wenigstens einer stationären Kamera Verwendung finden.

In weiterer Ausgestaltung der Einrichtung weisen die Schwenkneigekopfkameras einen schwenkbaren, frei positionierbaren Sensorkopf auf. Dabei kann in weiterer Ausgestaltung der Erfindung die Position des Sensorkopfes der Schwenkneigekopfkameras parametrierbar sein; ebenso wie die Position des Sensorkopfes in Abhängigkeit vom Objekt-Typ im Einricht-Betrieb optimal einstellbar ist und im Automatik-Betrieb typabhängig automatisch angefahren wird. In weiterer Ausgestaltung der Einrichtung können die Schwenkneigekopfkameras eine Zoomoptik aufweisen, welche ebenfalls parametrierbar ist.

Erfindungsgemäß werden somit anstelle von stationären Kameras Schwenkneigekopfkameras, sogenannte SNK-Kameras, oder die Kombination von SNK und stationären Kameras verwendet. Eine derartige Schwenkneigekopfkamera ist in der Hauptsache durch einen schwenkbaren, frei positionierbaren Sensorkopf gekennzeichnet. Der Schwenkbereich kann bis zu ±180Grad in allen Freiheitsgraden betragen. Eine weitere, gegebenenfalls zusätzliche Ausgestaltung einer derartigen Schwenkneigekopfkamera kann eine Zoomoptik sein. Die Verwendung einer Zoomoptik ermöglicht es, dass nur der relevante Bildausschnitt optimal vergrößert wird und somit eine Konzentration auf das Wesentliche erfolgt.

Sowohl die Position des Sensorkopfes der Schwenkneigekopfkamera als auch die Zoomeinstellung derselben ist parametrierbar und wird in Abhängigkeit vom Objekt-Typ im Einricht-Betrieb einmalig optimal eingestellt. Im anschließenden Automatik-Betrieb wird diese voreingestellte Positionierung und Zoomeinstellung vollautomatisch und typspezifisch angefahren.

Die Verwendung von derartigen Schwenkneigekopfkameras in der erfindungsgemäßen Einrichtung oder in einem derartigen System eröffnet eine Reihe von Vorteilen. Einer der Vorteile besteht in der Erhöhung der Flexibilität. Grundsätzliche kann die Anzahl der Kameras reduziert werden. Die Kosten sind in folglich geringer. Des Weiteren ist die Abdeckung von weiteren Aufgabenstellungen möglich, weil durch den frei positionierbaren Sensorkopf mit Zoomoptik eine Anpassung an eine große Objekt-Typen-Vielfalt und neue Objekt-Typen möglich ist, in dem lediglich die Parametrierung angepasst wird. Bei neuen Modellzyklen sind in der Regel keine aufwendigen Anlageumbauten oder -erweiterungen notwendig. Denn werden die Objekt-Merkmale geändert oder fallen diese zum Beispiel weg oder befinden sie sich an einer anderen Stelle oder kommen neue hinzu, müssen die Schwenkneigekopfkameras lediglich neu parametriert werden, das heißt, der frei positionierbaren Sensorkopf wird auf die neue Merkmalsposition "gerichtet" und mit der Zoomoptik eine optimale Vergrößerung, das heißt Auflösung, eingestellt. Dadurch kann insbesondere die Anbauposition der Schwenkneigekopfkameras wesentlich flexibler ausgewählt werden. Auch nach der Installation ist eine nachträgliche Auswahl weiterer oder anderer Merkmale möglich, ohne dabei bereits eingerichtete Typen von Werkstücken zu beeinflussen. Damit ist auch eine Erhöhung der Leistungsfähigkeit verbunden.

Durch den frei positionierbaren Sensorkopf der Schwenkneigekopfkameras kann ein Objekt-Merkmal mit optimaler Auflösung und an nahezu beliebiger Position erkannt werden. Es muss insbesondere kein Kompromiss zwischen Bildfeldgröße und Auflösung gefunden werden. Es besteht weiterhin die Möglichkeit, durch Verwendung räumlich verteilter Merkmale eine erhöhte Redundanz in der Berechnung der Objektposition sicherzustellen und dadurch letztendlich die Anlageverfügbarkeit zu erhöhen.

Des Weiteren bietet die erfindungsgemäße Einrichtung auch erweiterte Nutzungsmöglichkeiten. Es können ohne zusätzliche Hardware weitere typische Aufgabenstellungen der klassischen Bildverarbeitung umgesetzt werden, wie Typerkennung, Typverifikation, Kontrolle von Anbauteilen, Lesen von Beschriftungen, Lagebestimmung von Anbauteilen, Inspektion von zu applizierenden Bereichen mittels eines Gegenstandes, wie zum Beispiel Überwachung und Inspektion von Kleberaupen, Klebestellen oder Schweißnähten.

Weitere Vorteile sind in wirtschaftlicher Hinsicht gegeben, von denen ein Vorteil in einer Kostensenkung besteht. Die Senkung der Kosten der Gesamtanlage ist dadurch gegeben, weil ein geringerer Hardwareeinsatz und ein geringerer Planungsaufwand im Vorfeld notwendig ist. Die Senkung der Installationskosten ist dadurch gegeben, dass weniger Komponenten eingesetzt werden müssen, wie Kameras, Beleuchtungen, elektromechanische Anbauteile, und dadurch der Einrichtaufwand erheblich sinkt. Eine Senkung der Folgekosten für Instandhaltung und Anlagenwartung ist dadurch gegeben, dass die Komplexität der Anlage geringer ist. Eine Senkung der Lagerhaltungskosten ist schließlich dadurch gegeben, dass eine geringere Anzahl von Komponenten und nur ein Kameratyp eingesetzt zu werden braucht. Die Verstellbarkeit der Schwenkneigekopfkameras bzw. des Sensorkopfes derselben ist prinzipiell in mehreren Freiheitsgraden möglich, wobei üblicherweise drei benutzt werden, nämlich Drehung um z-Achse, Drehung um y-Achse und Zoom.

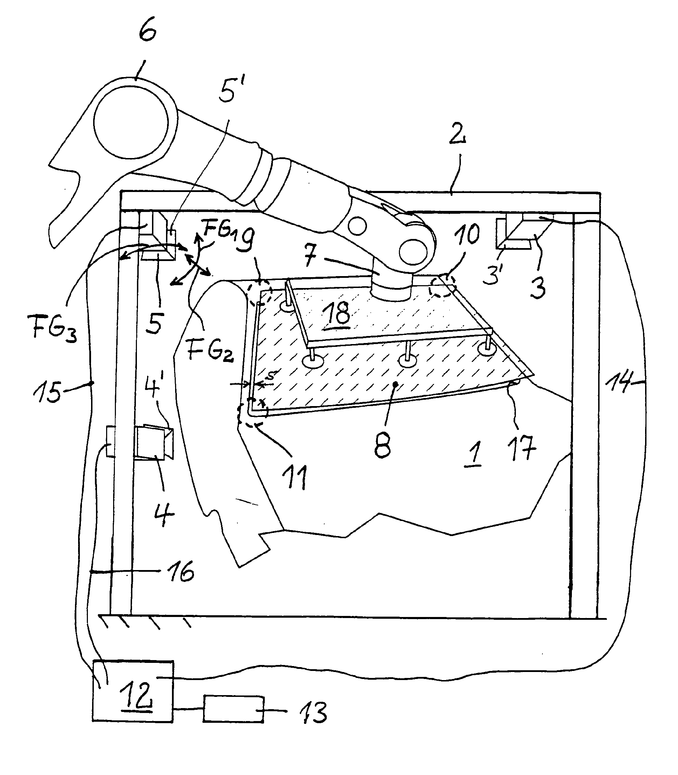

In der Figur ist eine perspektivische schematische Darstellung eines Roboterarms 6 mit einem Greifer 7 gezeigt, welcher eine Scheibe 8 zum Einbau in eine Karosse hält, wobei das Beispiel der automatisierten Fahrzeugmontage entnommen ist.

Karossen 1 werden nacheinander auf einer (nicht gezeigten) Transportschiene in eine Montage- oder Fügeposition verfahren, wo mittels eines Roboterarms 6 mit einem Greifer 7 eines Roboters eine vom Greifer 7 getragene Scheibe 8 in eine Karossenaussparung 17 der jeweiligen Karosse 1 eingesetzt wird. Der Roboter ist auf einer (nicht gezeigten) Fahrschiene verfahrbar angeordnet und kann zwischen einem Magazin, aus welchem die Scheiben 8 nacheinander entnommen werden, und der Karosse 1 hin- und herfahren bzw. schwenken.

Zur Aufnahme der Scheiben 8 besitzt der Roboterarm 6 an seinem Greifer 7 eine Greifplatte 18, an welcher Saugnäpfe zum Ergreifen und Loslassen der Scheibe 8 angeordnet sind. Nachdem der Roboter aus dem Magazin eine Scheibe 8 aufgenommen hat, fährt er die Scheibe in eine Vorhalteposition der Scheibe 8 kurz vor der Karosse 1, wie diese Position der Figur zu entnehmen ist.

Im gezeigten Beispiel drei, vorzugsweise digitale, Schwenkneigekopfkameras 3, 4 und 5 sind an einem Portal 2 im Bereich der Karosse 1 angeordnet, wobei die Schwenkneigekopfkameras 3, 4, 5 beispielsweise über Kabel 14, 15, 16 - oder auch über drahtlose Funkstrecken - mit einer Bildverarbeitungssystem-Rechenstation 12, Bildverarbeitungseinrichtung 12, verbunden sind. Über eine Eingabestation 13 erfolgt eine Dateneingabe in die Bildverarbeitungseinrichtung. Die Schwenkneigekopfkameras 3, 4 und 5 sind in sämtlichen Freiheitsgraden verstellbar, was durch die Bewegungsdoppelpfeile FG₁, FG₂ und FG₃ angedeutet ist. Die Verstellbarkeit der Schwenkneigekopfkameras 3, 4, 5 kann entweder dadurch gegeben sein, dass diese dergestalt kardanisch bewegliche und schwenkbare Sensorköpfe 3', 4', 5', SNK-Kameras, vorzugsweise mit Zoomoptik, aufweisen. Oder beim Einsatz von Kameras mit starrem Sensorkopf, ebenfalls vorzugsweise mit Zoomoptik, sind die Halterungen der Kameras am Portal 2 kardanisch beweglich und schwenkbar, so dass die Kameras 3, 4, 5 geschwenkt und gedreht werden können.

Die drei Schwenkneigekopfkameras 3, 4 und 5 erblicken je ein Objekt-Merkmal in einem relativ eng begrenzten Bereich 9, 10, 11 aus drei verschiedenen Richtungen, so dass damit drei verschiedene Vorhaltebereiche 9, 10, 11 durch die Vorhalteposition der Scheibe 8 gegeben sind. Die Schwenkneigekopfkameras 3, 4, 5 erfassen somit gleichzeitig sowohl einen - relativ kleinen - Bereich der Füge- bzw. Einbauposition der Karossenaussparung 17 der Karosse 1 als auch einen - ebenfalls relativ kleinen - Bereich der Vorhalteposition der Scheibe 8; Montage- oder Fügungsort und Scheibe 8 werden somit gleichzeitig von den Schwenkneigekopfkameras 3, 4, 5 erfasst.

Wesentlich ist, dass die Positionen zum Verbau der Scheibe 8 bezüglich der Stellung der Schwenkneigekopfkameras 3, 4, 5 parametriert werden, wobei sowohl die Position des Sensorkopfes 3', 4', 5' der Schwenkneigekopfkameras 3, 4, 5 als auch die Zoomeinstellung des Sensorkopfes 3', 4', 5' - die Kamera als solche insgesamt - parametrierbar ist, wobei die Parameter in Abhängigkeit vom Objekt-Typ im Einricht-Betrieb einmalig optimal eingestellt werden. Im anschließenden Automatik-Betrieb wird diese voreingestellte Positionierung und Zoomeinstellung vollautomatisch und typspezifisch angefahren.

Erfolgt anschließend in derselben Station ein Objektwechsel, beispielsweise werden in Karossenaussparungen mit unterschiedlichen Maßen andere Scheiben eingesetzt gegenüber der gezeigten Figur, so sind in der Regel keine aufwendigen Anlageumbauten oder -erweiterungen notwendig. Denn werden die Objekt-Merkmale geändert oder fallen diese zum Beispiel weg oder befinden sie sich an einer anderen Stelle oder kommen neue hinzu, müssen die Schwenkneigekopfkameras 3, 4, 5 lediglich neu parametriert werden, das heißt, der frei positionierbaren Sensorkopf 3', 4', 5' wird auf die neue Merkmalsposition "gerichtet" und, wenn gegebenenfalls vorhanden, mit der Zoomoptik eine optimale Vergrößerung, das heißt Auflösung, eingestellt.

Die Schwenkneigekopfkameras 3, 4, 5 können auch dem Roboter montiert und kalibriert und mit diesem verfahrbar sein, wobei es auch möglich ist, nur eine oder zwei Schwenkneigekopfkameras 3, 4, 5 auf dem Roboter und die dritte Schwenkneigekopfkamera 3, 4, 5 ortsfest am Portal 2 zu montieren. Der Roboter kann die Scheibe 8 in der Vorhalteposition kurzzeitig anhalten, so dass die Schwenkneigekopfkameras 3, 4, 5 eindeutig die Koordinaten der Scheibe 8 und der Karossenaussparung 17 ermitteln können.

Nunmehr berechnet die Bildverarbeitungssystem-Rechenstation 12 anhand der von den drei Schwenkneigekopfkameras 3, 4, 5 ermittelten Koordinaten sowie den vorher ermittelten Soll-Koordinaten der sogenannten Kalibrierkarosse und des sogenannten Kalibrierwerkstücks den Ist-Vektor, um welchen der Greifer 7 bzw. der Roboter in den drei Raumkoordinaten zu verfahren ist, um den Ist-Vektor zu fahren. In der Figur ist zur Veranschaulichung hierzu zweidimensional ein Versatz "s" zwischen Scheibe 8 und Karossenaussparung 17 eingezeichnet. Der Versatz "s" ist in Realität sechsdimensional, nämlich drei Positionen und drei Orientierungen.

## Patentansprüche

1. Einrichtung zur Bestimmung der Position eines Werkstücks (1,8) und der Position von Merkmalen (9,10,11) des Werkstücks im 3D-Raum unter Verwendung von mindestens einer elektronischen Kamera (3,4,5) und digitaler Bildverarbeitungseinrichtung (12), wobei die Kamera (3,4,5) auf ein gemeinsames Weltkoordinatensystem kalibriert ist und das Werkstück (1) in den Raum zwischen den Kameras (3,4,5) verbracht ist, **dadurch gekennzeichnet,**
**dass** als Kamera eine oder mehrere Schwenkneigekopfkameras (3,4,5), abgekürzt genannt SNK-Kamera, oder eine Kombination von wenigstens einer Schwenkneigekopfkamera (3,4,5) und von wenigstens einer stationären Kamera Verwendung finden.

2. Einrichtung nach Anspruch 1, **dadurch gekennzeichnet,**
**dass** die Schwenkneigekopfkameras (3,4,5) einen schwenkbaren, frei positionierbaren Sensorkopf (3',4',5') aufweisen.

3. Einrichtung nach Anspruch 1 oder 2, **dadurch gekennzeichnet,**
**dass** die Position des Sensorkopfes (3',4',5') der Schwenkneigekopfkameras (3,4,5) parametrierbar und in Abhängigkeit vom Objekt-Typ im Einricht-Betrieb optimal einstellbar ist.

4. Einrichtung nach Anspruch 1, **dadurch gekennzeichnet,**
**dass** die Position des Sensorkopfes (3',4',5') der Schwenkneigekopfkameras (3,4,5) parametrierbar und in Abhängigkeit vom Objekt-Typ im Automatik-Betrieb typabhängig automatisch angefahren wird.

5. Einrichtung nach Anspruch 1, **dadurch gekennzeichnet,**
**dass** die Schwenkneigekopfkameras (3,4,5) eine Zoomoptik aufweisen, welche ebenfalls parametrierbar ist.

6. Verfahren zur Bestimmung der Position eines Werkstücks (1,8) und der Position von Merkmalen (9,10,11) des Werkstücks im 3D-Raum unter Verwendung von mindestens einer elektronischen Kamera (3,4,5) und digitaler Bildverarbeitungseinrichtung (12), bei welchem die Kamera/s (3,4,5) auf ein gemeinsames Weltkoordinatensystem kalibriert wird bzw. werden und das Werkstück (1,8) in den Raum vor der Kamera (3,4,5) bzw. zwischen den Kameras verbracht wird,
**dadurch gekennzeichnet, dass** als Kamera/s Schwenkneigekopfkameras (3,4,5), SNK-Kameras, eingesetzt werden, welche einen schwenkbaren, frei positionierbaren Sensorkopf (3',4',5') aufweisen, wobei die Position des Sensorkopfes (3',4',5') parametriert werden kann und die Parametrierung in Abhängigkeit vom Objekt-Typ im Einricht-Betrieb optimal eingestellt wird.

7. Verfahren nach Anspruch 6, **dadurch gekennzeichnet,**
**dass** die Schwenkneigekopfkameras (3,4,5) eine Zoomoptik aufweisen, welche ebenfalls parametriert werden kann.

8. Verfahren nach Anspruch 6 oder 7, **dadurch gekennzeichnet,**
**dass** im Automatik-Betrieb die voreingestellte Positionierung der Schwenkneigekopfkameras (3,4,5) und gegebenenfalls deren Zoomeinstellung vollautomatisch und Objekt-typspezifisch angefahren wird.

9. Verfahren nach Anspruch 7 oder 8, **dadurch gekennzeichnet,**
**dass** sowohl die Position des Sensorkopfes der Schwenkneigekopfkamera als auch die Zoomeinstellung derselben parametrierbar ist und in Abhängigkeit vom Objekt-Typ im Einricht-Betrieb einmalig optimal eingestellt wird, wonach im anschließenden Automatik-Betrieb diese voreingestellte Positionierung und Zoomeinstellung vollautomatisch und typspezifisch angefahren wird.
